# EUROPEAN PATENT SPECIFICATION

(11) **EP 1 563 942 B1**
(45) Date of publication and mention of the grant of the patent: **16.06.2010**
(21) Application number: 03811126.6
(22) Date of filing: 13.11.2003
(51) Int. Cl.: B23K 20/12, B23K 103/10

(54) **METHOD FOR JOINING ALUMINUM POWDER ALLOY**
VERBINDUNGSVERFAHREN FÜR ALUMINIUMPULVERLEGIERUNG
PROCEDE D'ASSEMBLAGE D'ALLIAGE EN POUDRE D'ALUMINIUM

(30) Priority: 13.11.2002 JP 2002329847
(43) Date of publication of application: 17.08.2005
(73) Proprietor: Nippon Light Metal Company Ltd., Shinagawa-ku, Tokyo 140-8628 (JP); TOYO ALUMINIUM KABUSHIKI KAISHA, Osaka-shi, Osaka 541-0056 (JP)
(72) Inventor: OKANIWA, Shigeru, Nippon Light Metal Co., Ltd., Ihara--gun, Shizuoka 421-3203 (JP); KUSUI, Jun, Toyo Aluminium Kabushiki Kaisha, Osaka-shi, Osaka 541-0056 (JP); NISHIYAMA, Toshimasa, Nippon Light Metal Co., Ltd., Niigata-shi, Niigata 950-3101 (JP); ISHII, Hideki, Nippon Light Metal Co., Ltd., Ihara-gun, Shizuoka 421-3203 (JP); HORI, Hisashi, Nippon Light Metal Co., Ltd., Ihara-gun, Shizuoka 421-3203 (JP)
(74) Representative: Müller-Boré & Partner Patentanwälte
(86) International application number: PCT/JP2003/014414
(87) International publication number: WO 2004/043642

(56) References cited:
- EP-A- 1 279 458
- JP-A- 2000 094 159
- JP-A- 2001 047 261
- JP-A- 2002 346 770
- JP-A- 2002 346 770
- JP-A- 2003 149 382
- US-A1- 2002 153 130
- SHARMA S R ET AL: "Mechanical behavior of friction stir welded powder metallurgy aluminum alloys and composite" FRICTION STIR WELDING AND PROCESSING. PROCEEDINGS OF A SYMPOSIUM, MINERALS, METALS AND MATERIALS SOCIEZTY, WARRENDALE, PA, US, 2001, pages 151-157, XP008085443
- HIGASHI ET AL: "Effect of temperature on the mechanical properties of mechanically-alloyed materials at high strain rates" ACTA METALLURGICA & MATERIALIEN, PERGAMON / ELSEVIER SCIENCE LTD, GB, vol. 43, no. 9, September 1995 (1995-09), pages 3275-3282, XP005488702 ISSN: 0956-7151
- HU H M ET AL: "Microstructural investigation on B4C/Al-7093 composite" MATERIALS SCIENCE AND ENGINEERING A297, vol. 297, no. 1-2, January 2001 (2001-01), pages 94-104, XP008085489 Lausanne, Switzerland

## Description

### FIELD OF THE INVENTION

The invention relates to a method of welding parts made of sintered aluminum alloys or aluminum composite material.

### BACKGROUND

Sintered aluminum alloys are manufactured by compacting and sintering aluminum alloy powder. Various properties, e.g. strength, heat-resistance, abrasion-resistance, Young's modulus and low thermal expansion coefficient, are imparted to the sintered aluminum alloys by selection and designing of alloying compositions and/or improvement of processing, so that the sintered aluminum alloys are employed in various fields. Especially, sintered alloy parts, which are made of aluminum alloy powder prepared by rapid solidification process, retain fine metallographic structures originated in the powder preparation, and exhibit good mechanical properties due to the fine metallographic structures. Sintered alloy also has the advantage that ceramic particles can be dispersed in a matrix with ease, although dispersion of ceramic particles is difficult according to a conventional ingot process. Various properties, e.g. high strength, heat-resistance or neutron absorption, are imparted to aluminum alloys by selection of ceramic particles to be dispersed.

However, the powder metallurgy puts restrictions on profiles of sintered alloy parts. Therefore, aluminum alloy pieces, which are compacted and sintered to tentative profiles, are welded together to fabricate objective profiles suitable for use. Arc-welding, e.g. MIG or TIG welding, is a representative method for welding the aluminum alloy pieces.

For instance, sintered pieces, which are prepared by pressure sintering aluminum powder mixed with ceramic particles for impartment of special properties, are heat-treated and then welded by a conventional welding method, as disclosed JP 2002-504186T.

Sharma S.R. et al. (XP008085443) describes friction stir welding as joining methods for aluminum alloys and composites produced by a powder metallurgy route, particularly the mechanical behaviour of 7093 Al-SiC.

When aluminum alloy pieces are arc-welded together, large current shall be supplied to the aluminum alloy pieces due to high electric and thermal conductivity of the aluminum alloy. Generation of heat during welding causes various defects, e.g. deformation derived from thermal strain, reduction of strength at heat-affected zones or blowholes. Especially, sintered aluminum alloy parts occludes hydrogen therein at a rate of 20-30 cc/100 g in an insufficiently degassed state. The occlusion rate is very higher than a conventional casting (less than 1 cc/100 g), resulting in formation of numerous blowholes during welding. Although hydrogen occlusion quantity is reduced by vacuum degassing prior to sintering or by sintering in a vacuum atmosphere, hydrogen still remains in sintered alloy parts at a rate of 1-5 cc/100 g. As a result, blowholes may be often formed due to the residual hydrogen. If the degassing process is continued in a vacuum atmosphere for a long while, elements with low vapor pressure may be discharged from surfaces of alloy powder. The long-term heating also coarsens metallgraphic structures. Moreover, parts to be welded are melted according to a conventional welding process, so that metallographic structures are coarsened at the melted zones and the vicinities, resulting in reduction of strength at the weld zones compared with other parts. Furthermore, the coarsening cancels advantages of fine metallographic structures originated in rapid-solidified alloy powder.

A welding process often uses filler material, for welding dispersion-strengthened material comprising an aluminum alloy to which ceramic particles are dispersed. When such filler material does not disperse ceramic particles as reinforcement therein, weld zones are formed in a reinforcement-free state and so weakened in comparison with other parts.

### SUMMARY OF THE INVENTION

The present invention is accomplished to overcome the above-mentioned problems, aiming at provision of welded bodies of sintered aluminum alloys without substantial difference in strength between weld zones and the other parts.

The invention is characterized by friction stir welding sintered pieces, which are prepared by pressure sintering rapid-solidified aluminum alloy powder to a certain profile, the sintered pieces are friction stir welded together with a welding aid, made of an aluminum alloy free of ceramic particle, being sandwiched between or mounted on the sintered pieces.

The sintered pieces may be composite material of quenched aluminum alloy powder with ceramic particle. The ceramic particle is preferably of 10 µm or less in average particle diameter.

The friction stir welding process uses a welding tool, to which a rotating pin of 3-10 mm in length and 3-10 mm in diameter is fixed, having a radius of shoulder within a range of 6-25 mm. The friction stir welding is performed under conditions of: a rotation rate of the pin within a range of 500-3000 r.p.m., a travel speed of 200-1000 mm/minute and a pushing depth of the shoulder within a range of 0-1 mm.

When the sintered aluminum alloy pieces are welded together with a welding aid interposed therebetween, a welding aid with a T- or H-shaped section is preferably used in the manner that a vertical wall of the T-shaped section or a web of the H-shaped section is sandwiched between the sintered aluminum alloy pieces.

A welding aid, which contains ceramic particle at different ratios between a part to be sandwiched and the other parts, may be also used.

The inventive welding process is applicable not only for welding sintered aluminum alloy pieces together but also for welding a sintered aluminum alloy piece to an ingot aluminum alloy piece.

### BRIEF DESCRIPTION OF THE DRAWINGS

Fig. 1 is an explanatory view of a friction stir welding process (cited from JP 9-508073T).
Fig. 2 is a view for explaining friction stir welding aluminum alloy pieces together with a welding aid sandwiched therebetween.
Fig. 3 is a view for explaining friction stir welding aluminum alloy pieces together with a welding aid mounted thereon.
Fig. 4 is a view for explaining friction stir welding aluminum alloy pieces together with a welding aid having a T-shaped section.
Fig. 5 is a view for explaining friction stir welding aluminum alloy pieces together with a welding aid having a H-shaped section.
Fig. 6A is a sectional view illustrating formation of a plastic region during friction stir welding using a welding aid having a T-shaped section, and Fig. 6B is a sectional view of a weld joint after completion of friction stir welding.
Fig. 7A is a microphotograph of a welded zone formed by friction stir welding sintered pieces containing 5 mass % of B₄C of 9 µm in particle size, and Fig. 7B is a microphotograph of a matrix of the same sintered piece, which is not affected by a weld heat.
Fig. 8 is a photograph of macrostructure of a welded part formed by friction stir welding with a welding aid.

### PREFERRED EMBODIMENTS OF THE INVENTION

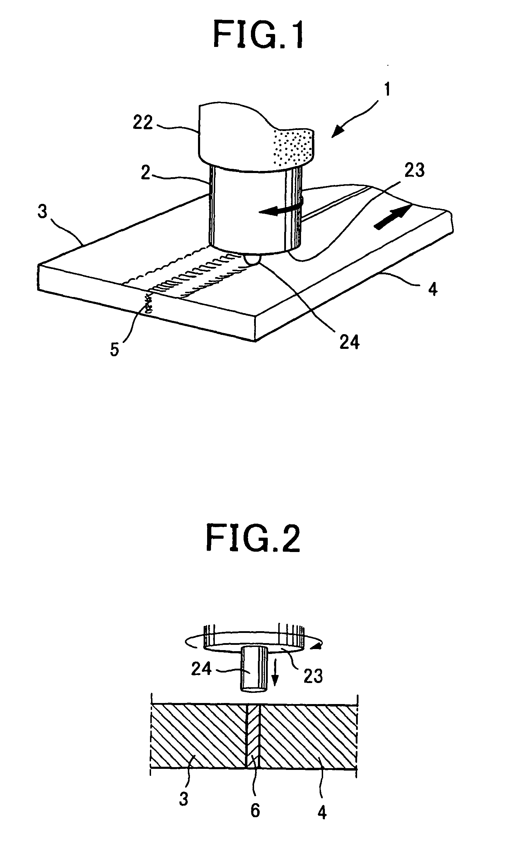

A friction stir welding process uses a rotator 2 having a pin 24 coaxially fixed to its top end, as shown in Fig. 1 (disclosed in JP 9-508073 T). The rotator 2 is rotated and pressed onto workpieces 3 and 4, so as to thrust the pin 24 into a matching department between the workpieces 3 and 4. Matching department of the workpieces 3 and 4 are heated in frictional heat by the pin 24 and stirred by rotation of the pin 24. Metal at the matching departments of the workpieces 3 and 4 which is plastically fluidized by the heat and stirring, is mixed between the workpieces 3 and 4. Since heat is rapidly diffused after passage of the pin 24, the metal is solidified and a weld zone 5 is formed between the workpieces 3 and 4. In Fig. 1, the numeral 22 is an upper part for connecting the rotator 2 to a driving source, the numeral 23 is a shoulder for fixing the pin 24, and the numeral 1 is a non-consumable probe provided with the rotator 2.

In the friction stir welding, a weld zone is formed by plastically fluidizing and mixing metal with a friction heat and a strong stirring power at matching departments of workpieces, but the metal is not melted as noted in arc-welding. Therefore, the weld zone is not heated up to an excessive high temperature, coarsening of metallographic structure or blowholes does not occur. Thus weld zone retains high mechanical strength.

Even when particle-dispersed composite pieces are friction stir welded, a weld zone is formed by mixing the composite material without insertion of a filler. As a result, the weld zone retains high mechanical strength, since it keeps a particle-dispersed matrix without thermal deformation or blowholes.

In order to ensure plastic fluidization of metal in a weld zone, ceramic particle mixed in composite material is preferably 10 µm or less in average particle diameter. If ceramic particle bigger than 10 µm is dispersed in the composite material, fluidization of metal in a weld zone becomes insufficient, resulting in heterogeneous distribution of the ceramic particle and strength reduction of a weld zone. The coarse ceramic particle also abrades the rotating pin.

In case of friction stir welding composite material, which disperses ceramic particle or the like therein, welding conditions are determined so as to form either a weld zone with high dispersoid concentration or a weld zone with low dispersoid concentration. The former weld zone is suitable for an increase of strength or neutron absorption, while the latter weld zone is suitable for facilitation of welding without abrasion or damage of a rotating pin. When friction stir welding is performed under the condition that a welding aid, made of an aluminum alloy containing ceramic particle at a controlled ratio, is sandwiched between or mounted on workpieces, a weld zone dispersing ceramic particle at a ratio corresponding to the controlled ratio is formed.

Rapid-solidified aluminum alloy powder is preferably prepared by gas atomizing process. The aluminum alloy powder preferably has an average particle size of 20-100 µm. Fine alloy powder less than 20 µm is difficult to manufacture and to handle due to poor fluidity. When coarse alloy powder above 100 µm is pressure sintered on the contrary, a metallographic structure of a sintered body is coarsened, resulting in poor mechanical strength in spite of a sintered alloy.

The alloy powder is poured in an aluminum can or subjected to cold isostatic molding or spark plasma sintering for improvement of handling. In the case where a workpiece to be welded is composite material, ceramic particle is mixed to the alloy powder at this stage. The ceramic particle to be mixed in the alloy powder is selected from the group consisting of Al₂O₃, ZrO₂, SiC, B₄C, WC, AlN, Si₃N₄, BN and TiB₂. Two or more of ceramic particles may be mixed in the alloy powder. A mixing rate of ceramic particle is determined to aim for impartment of an objective function.

The aluminum alloy powder, after being pre-treated for improvement of handling, is pressure sintered. The alloy powder may be subjected to degassing treatment such as vacuum suction in prior to pressure sintering. The alloy powder is preferably degassed while being heated, so as to accelerate removal of gases and to promote partial sintering reaction. Concretely, the alloy powder is heated at a temperature higher than 200°C (preferably 450°C) during degassing.

Pressure sintering may be hot working, e.g. extruding, forging or rolling, other than conventional sintering in a pressurized state. Such multistage process may be employed as hot-extruding or hot-rolling at first and then hot-forging.

Pressure sintered pieces provided as the above are then friction stir welded. The sintered pieces may be heat-treated according to the purpose in prior to or after the friction stir welding.

Friction stir welding process uses a welding tool having a radius of shoulder within a range of 6-25 mm provided with a rotating pin of 3-10 mm in length and 3-10 mm in diameter. Friction stir welding is preferably performed under conditions of: a rotation rate of the rotating pin within a range of 500-3000 r.p.m. at a travel speed of 200-1000 mm/minute and a pushing depth of a rotary shoulder within a range of 0-1 mm.

A rotation rate above 3000 r.p.m. or a travel speed slower than 200 mm/minute causes overheating and melting of parts to be welded, resulting in formation of coarse metallographic structure. On the contrary, a rotation rate less than 500 r.p.m. or a travel speed above 1000 mm/minute causes too much load applied to a rotator and breakdown of a rotating pin. A pushing depth of the rotator shoulder less than 0 mm means that the rotator shoulder is not in contact with workpieces and leads to formation of a weld zone in an unstrained state. The unstrained welding allows plastic fluidization of metal over a broad range inappropriate for formation of a normal weld structure, resulting in poor mechanical strength. If a pushing depth of the rotator shoulder exceeds 1 mm on the contrary, the rotating pin is often broken down due to application of heavy load.

In order to enhance weld strength of a ceramic particle-dispersed sintered body, it is preferable to increase a ratio of ceramic particle, e.g. Al₂O₃, ZrO₂ or SiC, dispersed in a weld zone. In order to improve neutron absorption, it is preferable to increase a ratio of B₄C dispersed in a weld zone. For the purpose, an aluminum alloy, which disperses ceramic particle therein at a relatively high ratio, is separately prepared and shaped to a welding aid with a proper profile. The welding aid is sandwiched between or mounted on workpieces to be friction stir welded.

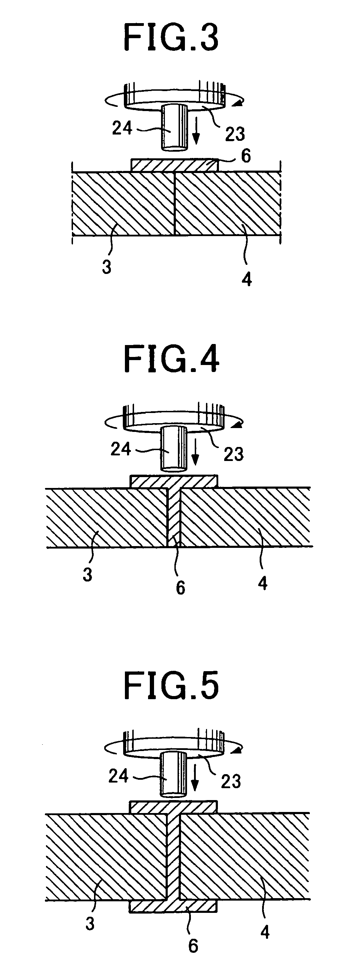

Concretely, a welding aid 6, made of a sintered aluminum alloy containing ceramic particle, is sandwiched between workpieces 3 and 4 (Fig. 2) or mounted on the workpieces 3 and 4 (Fig. 3), and the workpieces 3 and 4 are friction stir welded by thrusting a rotating pin 24 downwards into a space between the workpieces 3 and 4. However, an aluminum alloy, which disperses ceramic particle therein at a ratio more than ceramic particle in the workpieces 3 and 4, is not suitable for a welding aid, since excess inclusion of ceramic particle causes abrasion or breakdown of the rotating pin 24 or a shoulder 23.

A welding aid may have a T-shaped section (Fig. 4) or a H-shaped section (Fig. 5). A vertical wall of the T-shaped welding aid or a web of the H-shaped welding aid is sandwiched between the workpieces 3 and 4. In the case where the workpieces 3 and 4 are thick sintered pieces, the H-shaped welding aid is interposed between the workpieces 3 and 4, and friction stir welding is repeated from upper and lower sides. The H-shaped welding aid may be a divisible type, which is separated to each piece at a web of the H-shaped section, so as to enable insertion of each divided piece into a matching department between the workpieces 3 and 4 from both sides.

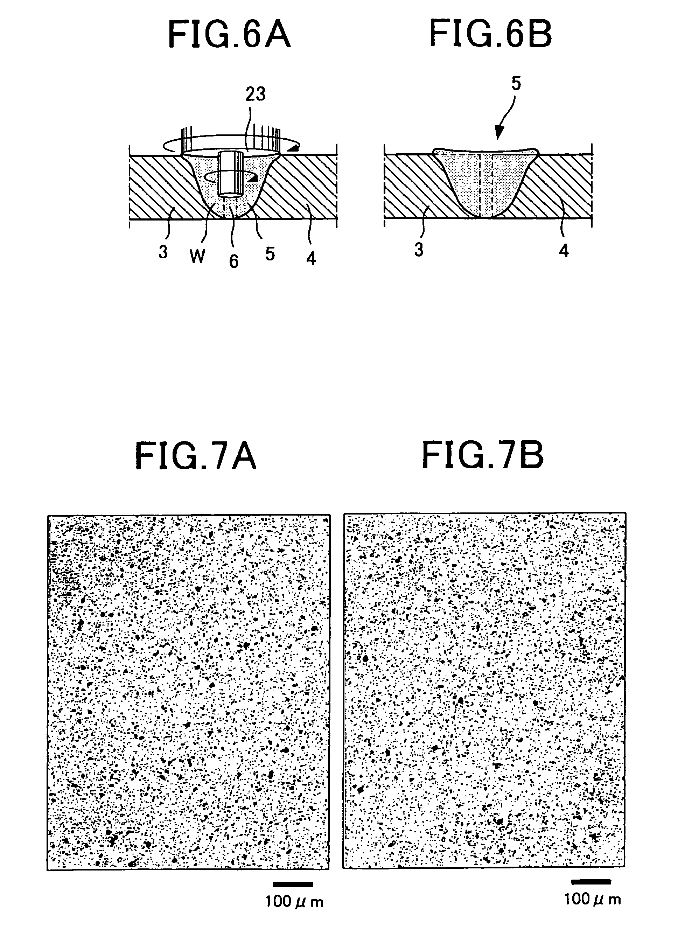

Fig. 6A shows a plastic region W formed by a frictional heat derived from rotation and travel of a rotating pin 24 during friction stir welding using a T-shaped welding aid (Fig. 4), and Fig. 6B shows a weld zone 5 after completion of friction stir welding. Since the T-shaped welding aid is used in the welding operation shown in Figs. 4, 6A and 6B, a shallow groove is formed at a center of the weld zone and a couple of ridges are formed at both sides of the shallow groove, but any part of the weld zone is thicker than the original workpieces 3 and 4. In short, use of such a welding aid as to form ridged parts on the weld zone is preferable for assurance of weld strength, if the external appearance does not cause any trouble. If the weld zone shall have a flat surface, the ridged parts can be removed by machining or grinding.

As for the T- or H-shaped welding aid, a dispersion ratio of ceramic particle may be differentiated between a vertical wall of the T-shaped welding aid or a web of the H-shaped welding aid, which is sandwiched between the workpieces, and a horizontal wall of the T-shaped welding aid or a flange(s) of the H-shaped welding aid, which is mounted on the workpiece. For instance, a content of ceramic particle is made greater at the vertical wall of the T-shaped welding aid or the web of the H-shaped welding aid, but made smaller at the horizontal wall of the T-shaped welding aid or the flange(s) of the H-shaped welding aid. When friction stir welding is performed using a welding aid with such a differential content of ceramic particles, high weld strength is gained with less abrasion of a rotating pin or shoulder.

The other features of the invention will be clearly understood from the following examples.

### Example 1:

Each aluminum alloy of a composition in Table 1 was pulverized to 55 µm in average particle diameter by air atomization method.

The alloy powder was compacted to a cylindrical billet of 95 mm in diameter by cold isostatic molding with a pressure of 1200 kg/cm². The billet was degassed and sintered by 2 hours heating at 560°C in vacuum. After the sintered billet was cooled to a room temperature, it was reheated to 500°C by an induction heater and then extruded (i.e., pressure sintered) to a flat sheet of 4 mm in thickness. Thereafter, the sheet was subjected to T6 treatment (solution heating at 520°C for one hour, water quenching and then aging at 180°C for 6 hours).

The heat-treated sheet was friction stir welded together, using a welding tool having a radius of shoulder of 12 mm provided with a rotating pin of 5 mm in length and 4 mm in diameter under conditions of: a rotation rate of 1500 r.p.m., a travel speed of 400 mm/minute and a pushing depth of 0.5 mm.

Test pieces, which involved a weld zone, were sampled from the welded sheet and subjected to a tensile test. Test results are shown in Table 2.

For comparison, extruded parts with C-shaped section were MIG welded together, using a filler JIS A4043. Test pieces, which involved a weld zone, were sampled from the welded body and subjected to the same tensile test. Test results are also shown together in Table 2.

**Table 1: Chemical Composition of Samples (mass %)**

| Alloy No. | Si | Fe | Mg | Cu | Cr | Sm | Gd |
|---|---|---|---|---|---|---|---|
| 1 | 0.6 | 0.2 | 0.8 | 0.3 | 0.2 | - | - |
| 2 | 0.8 | 4.8 | 0.9 | 0.2 | 0.3 | - | - |
| 3 | 2.0 | 2.0 | 2.5 | 1.0 | - | - | 2.0 |
| 4 | 2.0 | 2.0 | 2.5 | 1.5 | - | 5.3 | - |
| 5 | 25 | 0.2 | 0.9 | 0.2 | 0.3 | - | - |

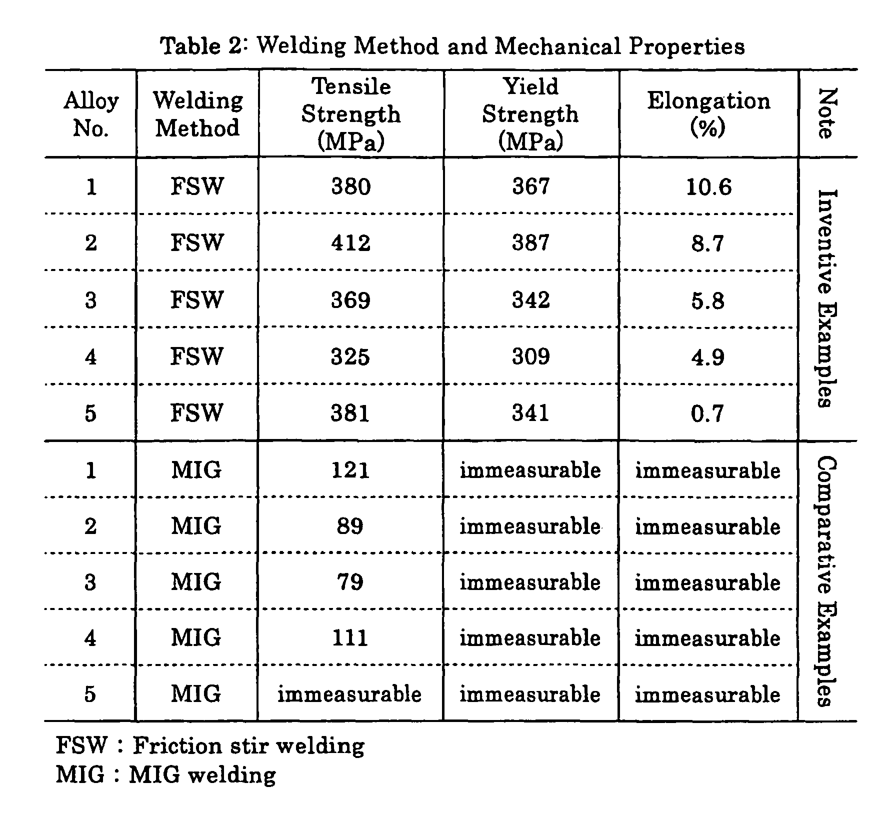

Results in Table 2 prove that the inventive examples, i.e. friction stir welded pieces, had high strength.

On the other hand, the comparative examples, i.e. MIG welded pieces, were extremely inferior in mechanical strength and elongation, so that the tensile test itself was difficult. The inferior properties are caused by formation of blowholes and coarsening of metallographic structure. In fact, when the MIG welded pieces were inspected by ultrasonic reflect scope, many defects, probably derived from blow holes, were detected.

When the friction stir weld zone was inspected by ultrasonic reflect scope, no defects were detected. A fracture surface formed by the tensile test was a normal ductile fracture plane.

### Example 2:

Several powdery compositions were prepared by mixing aluminum alloy powders Nos. 2 and 3 in Table 1 with ceramic particles, Al₂O₃, SiC, B₄C and AlN, of average particle diameters at mixing ratios in Table 3. Each composition was compacted, extruded and welded by the same way as Example 1. The welded peaces were subjected to the same tensile test as **Example 1**.

Results are also shown in Table 3.

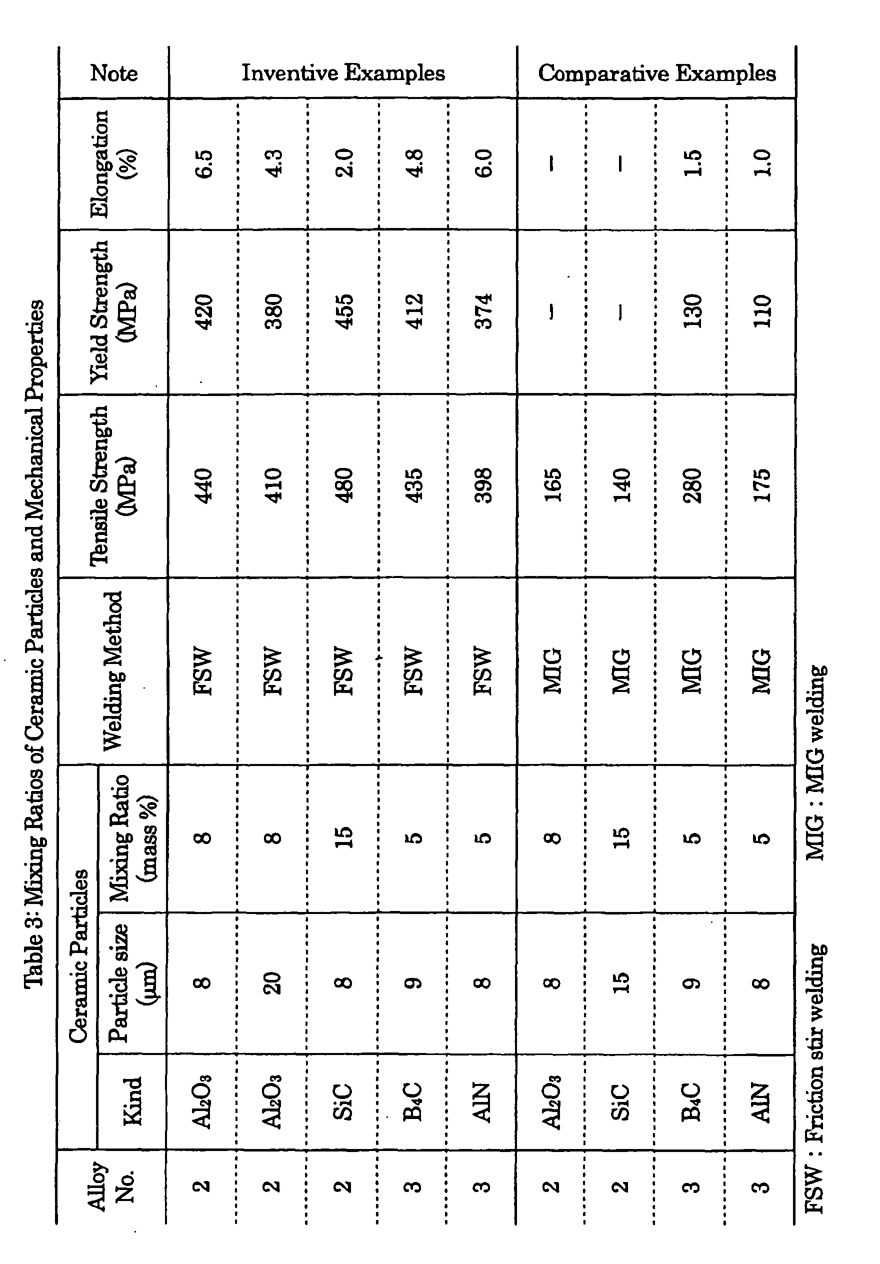

It is noted from Table 3 that the inventive examples, i.e. friction stir welded pieces, had high tensile strength even at weld zones. The welded piece, made of the alloy No. 1 dispersing ceramic particle of 10 µm or less in size, had higher strength than the welded piece, made of the alloy No. 2 dispersing ceramic particle above 10 µm in size. Moreover, it was recognized that a rotating pin, which was used for friction stir welding the alloy No. 2 dispersing ceramic particle above 10 µm in size, was heavily abraded in comparison with other examples.

On the other hand, the comparative examples, i.e. MIG welded pieces, were extremely inferior in mechanical strength and elongation, so that the tensile test itself was difficult. The inferior properties are caused by formation of blowholes and coarsening of metallographic structure. In fact, when the MIG welded pieces were inspected by ultrasonic reflect scope, many defects, probably derived from blow holes, were detected. No ceramic particles were observed on fracture surface.

When the inventive friction stir weld zone was inspected by ultrasonic reflect scope, no defects were detected. Observation results on metallographic structures of welded zones and base metals with an optical microscope prove that there were no substantial difference in dispersion of ceramic particles between the weld zones and the base metals. As an example, Figs. 7A and 7B show microstructures of a welded zone and a base metal, respectively, when a sintered piece, made of an alloy No. 3 containing B₄C of 9 µm in size at a ratio of 5 mass %, was friction stir welded.

### Example 3:

A powdery composition, prepared by mixing aluminum alloy powder No. 3 (55 µm in average particle diameter) in Table 1 with B₄C powder (9 µm in average particle diameter) at a ratio of 5 mass %, was compacted and extruded by the same way as **Example 1.**

Two flat bars of 5.5 mm in thickness were provided in this way. A welding aid was separately prepared, by extruding an aluminum alloy JIS 6N01 to a T-shaped section of 1.0 mm in thickness and 18.0 mm in width. The welding aid was sandwiched between the flat bars as **Fig. 4** and friction stir welded under the same conditions as Example 1.

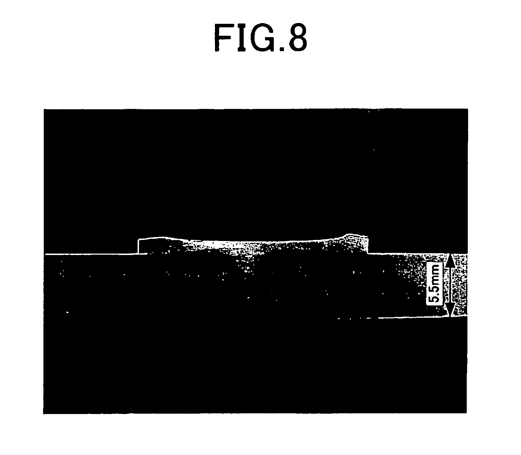

Fig. 8 is a photograph of a macrostructure of a weld zone. It is noted that the flat bars were sufficiently welded together with the welding aid.

### INDUSTRIAL APPLICABILITY OF THE INVENTION

According to the present invention as above-mentioned, sintered pieces of rapid-solidified aluminum alloy powder are friction stir welded, and a weld zone is not melted so as to inhibit formation of blowholes and coarsening of metallographic structure. As a result, the sintered alloy piece can be welded without any decrease of its original mechanical properties. Especially, composite material, dispersing ceramic particles as reinforcement therein, can be welded according to the invention, so as to provide a welded structure, which retains an original particle-strengthening effect.

Therefore, application of sintered aluminum alloys and composite materials is greatly expanded to various uses.

## Claims

1. A method of welding a sintered aluminum alloy by friction stir welding sintered pieces (3, 4) prepared by pressure sintering rapid-solidified aluminum alloy powder, **characterized in that** the sintered pieces (3, 4) are friction stir welded together with a welding aid (6), made of an aluminum alloy free of ceramic particle, being sandwiched between or mounted on the sintered pieces (3, 4).

2. The welding method of claim 1, wherein the sintered pieces (3, 4) are composite material prepared by pressure sintering a mixture of rapid-solidified aluminum alloy powder with ceramic particle.

3. The welding method of claim 2, wherein the ceramic particle has an average particle diameter of 10 µm or less.

4. The welding method defined by either one of claims 1 to 3, wherein the friction stir welding is performed using a welding tool having a radius of shoulder within a range of 6-25 mm provided with a rotating pin of 3-10 mm in length and 3-10 mm in diameter under conditions of: a rotation rate of the rotating pin within a range of 500-3000 r.p.m., a travel speed within a range of 200-1000 mm/minute and a pushing depth of a rotator shoulder within a range of 0-1 mm.

5. The welding method defined by either one of claims 1 to 4, wherein the welding aid (6) has a T- or H-shaped section, a vertical wall of the T-shaped section or a web of the H-shaped section being sandwiched between the sintered pieces.

6. The welding method of claim 5, wherein the welding aid (6) comprises a first part to be sandwiched between the sintered pieces (3, 4) and other part(s) not to be sandwiched between the sintered pieces, the first part having a ratio of ceramic particles different from the other part(s).

## Patentansprüche

1. Schweißverfahren einer gesinterter Aluminiumlegierung durch Rührreibschweißen gesinterter Stücke (3, 4), hergestellt durch Drucksintern von rasch verfestigtem Aluminiumlegierungspulver, **dadurch gekennzeichnet, daß** die gesinterten Stücke (3, 4) rührreibgeschweißt werden zusammen mit einer Schweißhilfe (6), hergestellt aus einer Aluminiumlegierung, frei von keramischen Teilchen, zwischengelegt zwischen oder befestigt auf den gesinterten Stücken (3,4).

2. Schweißverfahren gemäß Anspruch 1, wobei die gesinterten Stücke (3,4) Kompositmaterial ist, hergestellt durch Drucksintern eines Gemisches von rasch verfestigtem Aluminiumlegierungspulver mit keramischen Teilchen.

3. Schweißverfahren gemäß Anspruch 2, wobei das keramische Teilchen einen durchschnittlichen Teilchendurchmesser von 10 µm oder weniger aufweist.

4. Schweißverfahren, definiert durch einen der Ansprüche 1 bis 3, wobei das Rührreibschweißen unter Verwendung eines Schweißwerkzeuges mit einem Schulterradius innerhalb eines Bereiches von 6-25 mm, versehen mit einem rotierenden Dorn von 3-10 mm in der Länge und 3-10 mm im Durchmesser unter Bedingungen einer Rotationsgeschwindigkeit des rotierenden Dorns innerhalb eines Bereichs von 500-3000 Upm, einer Schweißgeschwindigkeit innerhalb eines Bereichs von 200-1000 mm/min und einer Schubtiefe einer Rotatorschulter innerhalb eines Bereichs von 0-1 mm, durchgeführt wird.

5. Schweißverfahren, wie in einem der Ansprüche 1 bis 4 definiert, wobei die Schweißhilfe (6) einen T- oder H-geformten Abschnitt, eine vertikale Wand des T-geformten Abschnitts oder eine Bahn des H-geformten Abschnitts, zwischengelegt zwischen die gesinterten Stücke, aufweist.

6. Schweißverfahren gemäß Anspruch 5, wobei die Schweißhilfe (6) einen ersten Teil, der zwischen die gesinterten Stücke (3, 4) gelegt wird, und (einen) andere(n) Teil(e), welche nicht zwischen die gesinterten Stücke zwischengelegt wird bzw. werden, aufweist, wobei der erste Teil ein Verhältnis von keramischen Teilchen unterschiedlich zu dem bzw. den anderen Teil(en) aufweist, umfaßt.

## Revendications

1. Procédé de soudage d'un alliage d'aluminium fritté par soudage par friction-malaxage de pièces frittées (3, 4) préparées par frittage sous pression d'une poudre d'alliage d'aluminium à solidification rapide, **caractérisé en ce que** les pièces frittées (3, 4) sont soudées l'une à l'autre par friction-malaxage au moyen d'un adjuvant de soudage (6) constitué d'un alliage d'aluminium exempt de particules céramiques pris en sandwich entre les pièces frittées (3, 4) ou monté sur celles-ci.

2. Procédé de soudage selon la revendication 1, dans lequel les pièces frittées (3, 4) sont constituées d'une matière composite préparée par frittage sous pression d'un mélange de poudre d'aluminium à solidification rapide et de particules céramiques.

3. Procédé de soudage selon la revendication 2, dans lequel la particule céramique a un diamètre moyen de particule inférieur ou égal à 10 µm.

4. Procédé de soudage selon l'une quelconque des revendications 1 à 3, dans lequel le soudage par friction-malaxage est effectué en utilisant un outil de soudage présentant un rayon d'épaulement allant de 6 à 25 mm et doté d'une broche rotative d'une longueur allant de 3 à 10 mm et d'un diamètre allant de 3 à 10 mm, dans les conditions suivantes : la vitesse de rotation de la broche rotative est de 500 à 3 000 tours/minute, la vitesse de déplacement est de 200 à 1 000 mm/minute et la profondeur de poussée d'un épaulement de rotateur va de 0 à 1 mm.

5. Procédé de soudage selon l'une quelconque des revendications là 4, dans lequel l'adjuvant de soudage (6) comprend une section en T ou en H, une paroi verticale de la section en T ou une âme de la section en H étant prise en sandwich entre les pièces frittées.

6. Procédé de soudage selon la revendication 5, dans lequel l'adjuvant de soudage (6) comprend une première partie destinée à être prise en sandwich entre les pièces frittées (3, 4) et une autre/d'autres partie(s) non destinée(s) à être prise(s) en sandwich entre les pièces frittées, la première partie ayant une proportion de particules céramiques différente de celle de l'autre/des autres partie(s).
